(19) Europäisches Patentamt
European Patent Office
Office européen des brevets

(11) **EP 3 349 038 A1**

(12) **EUROPEAN PATENT APPLICATION**

(43) Date of publication:
**18.07.2018 Bulletin 2018/29**

(51) Int Cl.:
*G01S 13/93* (2006.01)   *G01S 13/58* (2006.01)
*G01S 13/72* (2006.01)   *G01S 7/41* (2006.01)
*G01S 13/524* (2006.01)

(21) Application number: **17151251.0**

(22) Date of filing: **12.01.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Delphi Technologies, Inc.
Troy, MI 48007-5052 (US)**

(72) Inventors:
• **YAN, Honghui
412227 Wuppertal (DE)**

• **DOERR, Wolfgang
51674 WIEHL (DE)**
• **IOFFE, DR. ALEXANDER
53229 BONN (DE)**

(74) Representative: **Delphi France SAS
c/o Delphi Technologies
Campus Saint Christophe
Bâtiment Galilée 2
10, avenue de l'Entreprise
95863 Cergy Pontoise Cedex (FR)**

(54) **METHOD TO CLASSIFY OBJECTS IN A VEHICLE ENVIRONMENT BASED ON RADAR DETECTIONS**

(57)    In an vehicle equipped with an on-board radar system, a method of classifying objects in the vicinity of said vehicle comprising the following steps:
a) emitting radar signals from said vehicle and determining radar detections from reflections of the said signals from objects in the vehicle vicinity; b) based on one or more parameters of the detections, clustering said detected detections into one or more clusters representing objects in said vehicle vicinity; c) for a cluster, determining a measure of the spread of at least one detection parameter; d) determining a spread function, said spread function being a function of said spread of one or more detection parameters; e) determining a value of a density function based on the number of detections that fall within said spread function; f) classifying said object based on said density function value.

FIG. 4

**Description**

TECHNICAL FIELD

The invention relates to vehicles having on-board radar systems and a method of discriminating between different classes of objects in the vehicle environment such as other vehicles, pedestrian and other objects, based on radar detections.

BACKGROUND OF THE INVENTION

It is known to equip vehicles with radar systems in order to characterize the environment surrounding a vehicle, in particular in a forward-looking direction. Typical vehicles equipped with such systems have an antenna unit/array and a receiver unit adapted to detect radar reflections (returns) reflected from objects. These radar reflections are also referred to as detections. In this way, the surrounding environment may be characterized and objects detected. It is often necessary to also distinguish between different types of objects (such as other vehicles, pedestrians or other objects), and also whether these are moving or stationary.

Automotive radars are widely used in various applications such as advanced Emergency Braking (AEB) and adaptive cruise control (ACC), and such like. Radar target discrimination and classification are becoming more and more important for these applications.

In automotive radar target discrimination and classification, such distinguishing features may be derived from various radar data such as the mean, extension, and deviation of radar parameters. These parameters may be spatial distribution of detections in longitudinal, lateral or elevational directions, speed/Doppler, Micro-Doppler, as well as Radar Cross Section (RCS) data and so on. Moving objects can easily be detected and distinguished from the surroundings (e.g. guardrails, poles, or vegetation), via e.g. speed/Doppler and/or micro-Doppler based parameters. However, it is still a challenge to distinguish between different stationary obstacles such as vehicles at the end of a traffic jams, and other objects due to having no effective speed/Doppler information.

In principle, features (data) based on spatial distribution of detections can be used to distinguish some sparsely spaced stationary objects. However, such an approach often fails in practice, especially for scenarios with closely spaced objects. For example, spatial distribution based features alone are usually not enough to distinguish parked cars from guiderails, pole-like objects (e.g. tree, traffic cone, street light poles, etc.) in the vicinity of the vehicle.

It is an object of the invention to solve the aforementioned problems and provide an improved method of distinguishing between different types and classes of object of a vehicle environment particularly stationary objects.

SUMMARY OF THE INVENTION

In one aspect is provided a method in an vehicle equipped with an on-board radar system, a method of classifying objects in the vicinity of said vehicle comprising the following steps:

a) emitting radar signals from said vehicle and determining radar detections from reflections of the said signals from objects in the vehicle vicinity;
b) based on one or more parameters of the detections, clustering said detected detections into one or more clusters representing objects in said vehicle vicinity;
c) for a cluster, determining a measure of the spread of at least one detection parameter;
d) determining a spread function, said spread function being a function of said spread of one or more detection parameters;
e) determining a value of a density function based on the number of detections that fall within said spread function;
f) classifying said object based on said density function value.

In step b) and or step d) one or the parameters of detections may be: spatial position in longitude ($r_{lon}$), spatial position in latitude ($r_{lat}$), spatial position in elevation ($r_{ele}$), speed (v), Doppler ($f_d$), Micro-Doppler ($f_{md}$), Amplitude ($a_m$), and Radar Cross Section (RCS).

Said spread (function) may be determined from a statistical parameter of said detection parameter.

Said statistical parameter may be the mean and/or standard deviation of the detection parameter.

Said spread function may be determined form Principle Component analysis methodology.

Said spread function may be defined as $extension(r_{lon}) \times extension(r_{lat})$ where extension $(r_{lon})$ and extension$(r_{lat})$ are spreads of the parameter of spatial position in longitude ($r_{lon}$) and latitude ($r_{lat}$) respectively.

Said spread function may be defined as $extension(r_{lon}) \times extension(r_{lat}) \times extension(r_{ele})$ where $extension(r_{lon})$, $extension(r_{lat})$, $extension(r_{ele})$ are spreads with respect to the spatial position in longitude ($r_{lon}$), latitude ($r_{lat}$), and

elevation ($r_{ele}$) respectively.

Said spread function is defined as *extension*($r_{lon}$) $\times$ *extension*($r_{lat}$) $\times$ *extension*($r_{ele}$) $\times$ *extensions*($v$) where *extension*($v$) is a spread with respect to the parameter of speed ($v$).

In step f) said objects may be classified on the basis of one or more density function values and additionally data relating to one of more spread functions determined from step d).

The method may include the additional step of determining the ratios of one or more density function values and classifying said objects in the basis of these ratio(s).

Said additional step may be based on one of the following density function value ratios:

i) the density function value of based on a spread function of spatial position of elevation (rele) and density function based on a spread function of spatial position of latitude (rlat,) (N/ext rele)/(N/ext rlat));

ii) the density function value of based on a spread function of spatial position of elevation (rele) and density function based on a spread function of spatial position of longitude (rlat,) (N/ext rele)/(N/ext rlong); and,

iii) the density function value of based on a spread function of spatial position of latitude (rlat) and density function based on a spread function of spatial position of longitude (rlong) (N/ext rele)/(N/ext rlat)).

The objects may be classified in step f) into one or more of the following classes: moving vehicle, stationary vehicle, pedestrian, road sign, post, guard or side rail.

BRIEF DESCRIPTION OF THE DRAWINGS

The present invention is now described by way of example with reference to the accompanying drawings in which:

- Figure 1 shows a plan view showing an vehicle equipped with a radar system including a radar emitter and detection unit, and the surroundings;
- Figure 2 shows an example of the methodology (signal processing) flow-chart in one example;
- Figure 3 shows a 2-dimensional map of radar reflections (detections) from a vehicle scene;
- Figure 4 shows the vehicle cluster of figure 3 in more detail;
- Figure 5 shows a schematic plan view of a vehicle with radar which receives detections from a guardrail in e.g. two different orientations shown schematically as A and B;
- Figure 6 shows a spread of two parameters $\alpha$ and $\beta$ of radar returns, e.g. of the cluster; the figure shows a multi-variate Gaussian distribution;
- Figure 7 shows results of the density function values for a spread function; and
- Figures 8, 9 and 10 show figures similar to figure 7 showing the density function values and spreads from a number of sample data sets for again another car and other objects.

DESCRIPTION OF THE PREFERRED EMBODIMENTS

In a simple example the stationary target discrimination is performed based on reflection-density based distinguishing features.

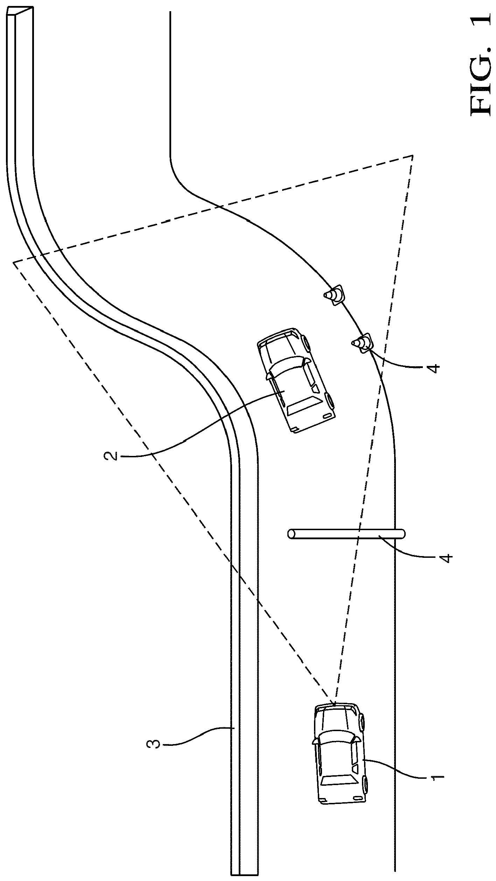

An example of the invention will now be described with reference to figure 1. The figure shows a plan view showing a vehicle 1 equipped with a radar system including a radar emitter and detection unit. The emitter/detection units are mounted on the (host) vehicle 1, which includes processing means to process data of the radar returns. The figure also shows different types of objects in the vehicle environment (proximity) and may include "objects-of-interest" (targets such as another vehicle 2) and "object of non-interest" (clutter, interfering objects) in the view of the radar, such as guide rails, trees and such like. The illumination geometry of the radar sensor of the host vehicle may be for example forward-looking as shown in the figure, side-looking, forward-side looking, rear-looking and so on. The objects-of-interest (target) may be either stationary or moving (non-stationary). For example the target may be another vehicle 2, or cyclists, pedestrians, and such like. Types of objects of non-interest can be objects such as guardrails 3 (e.g. side rails/central reservation rails) and pole-like objects 4 (guardrails, poles, signs , lamp-posts, trees, vegetation and such like) and such like. Such objects may be regarded as objects of non-interest as they are not important for the purposes of automotive applications and decision making. It can for example be assumed that the objects are never found in driving lanes and thus are clutter (hence object-of-noninterest).

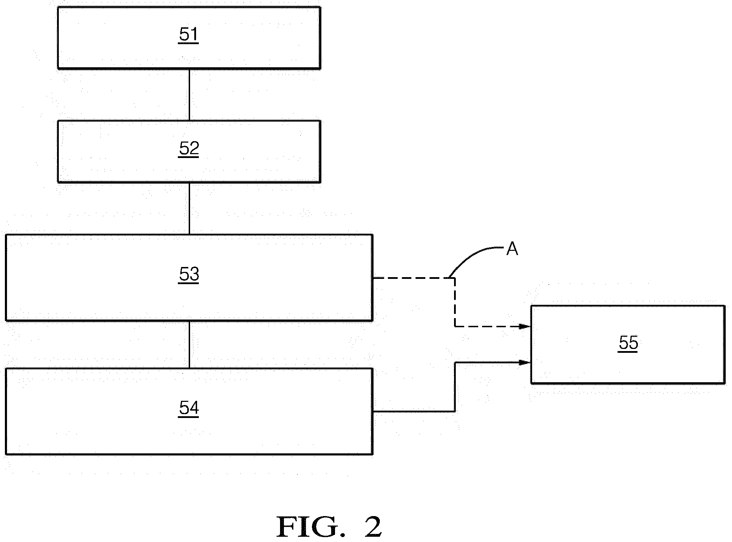

Figure 2 shows an example of the methodology (signal processing) flow-chart in one example.

Step S1

In step S1 the vehicle mounted radar system emits a radar signal (e.g. at time intervals) via radar emitters/antenna elements and detects reflections (of these signals) from various objects in the environment via a detector. Both the emitter and detector may comprise multiple elements to form an antenna array as is known in the art. So in other words the objects in the environment are illuminated with radar, and echo signals (radar reflections/detections/returns) are received for processing in the later steps.

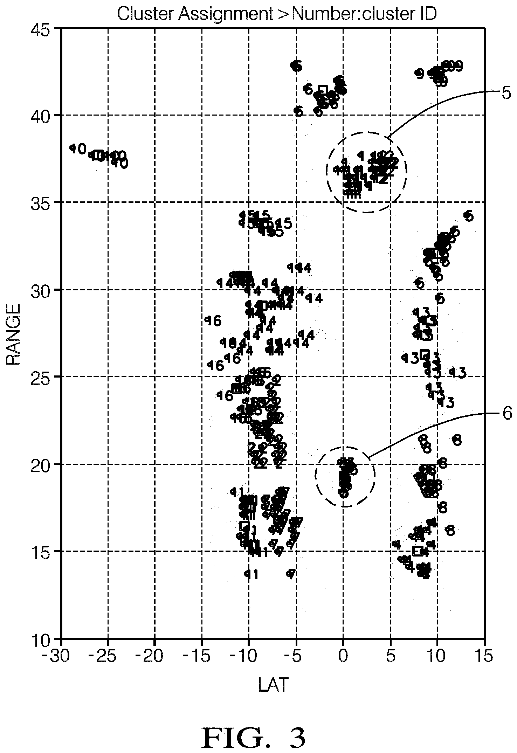

Figure 3 shows a 2-dimensional map of radar reflections (detections) from a vehicle scene.

It is worth mentioning that the detections may provide data with respect to one or more of the following parameters (i.e. have the following attributes): spatial position in longitude ($r_{lon}$), latitude ($r_{lat}$), and elevation ($r_{ele}$), as well as speed (v), or Doppler ($f_d$), Micro-Doppler ($f_{md}$), Amplitude ($a_m$), or Radar Cross Section (RCS). The availability of such parameters depends on specific setup of the radar system, the applied signal processing method, as well as the target types. For example, elevation position ($r_{ele}$) is not available in some radars, and speed (v), Doppler ($f_d$), Micro-Doppler ($f_{md}$) are generally not used/available for stationary object analysis.

Step S2

In this step, radar detections are clustered (i.e. grouped) by e.g. known clustering algorithms. Detections used for clustering may come from single-scan measurement or multi-scan measurement. With respect to single-scan detections: these detections may be from certain single snapshot; i.e. at one particular time instant. For example, detections can be obtained by applying CFAR (constant false alarm) thresholds onto the radar range-Doppler map/snapshot. Multi-scan detections provide data with respect to detections from multiple snapshots (at a plurality of time instants). Usually, single-scan detections can be collected or combined by certain algorithms over slow-time, e.g. radar tracking algorithm, Occupancy-Grid-Mapping (OGM), Back-Projection, etc.

So in this step radar detections are grouped into clusters. Figure 3 shows various clusters representing a vehicle 5 and a pedestrian 6. In figure 3 the clustering is based on radar detections in 2-dimensional space. Clustering algorithms may determine a cluster in 1- or 3- dimensional space alternatively. Furthermore the clustering may be based on any single radar parameter or any combination of radar parameters, and not necessarily based on spatial clustering. For example the clustering may be determined based on Doppler speed only. So in other words, examples are thus not limited to 1, 2, or 3 dimensional spaces and the clustering algorithm may be based on (e.g. ranges) of one or more parameters. The skilled person would understand that any degree of complexity in a clustering algorithm may be provided. Clustering algorithms may be implemented in a 1- up to N-dimensional space, where N is the number of parameter/variable available. For example, It can be implemented in 4-D space such as the space of ( lon, lat, ele, speed/doppler)

Step 3

In this step a spread function is determined. This can be alternatively regarded as an "extension estimation". The term "extension" or "spread" may be regarded as a parameter relating to the spread in the cluster with regard to any radar parameter (variable); this may be in one, two or three dimensional space for example but is not limited to spatial extension/spread.

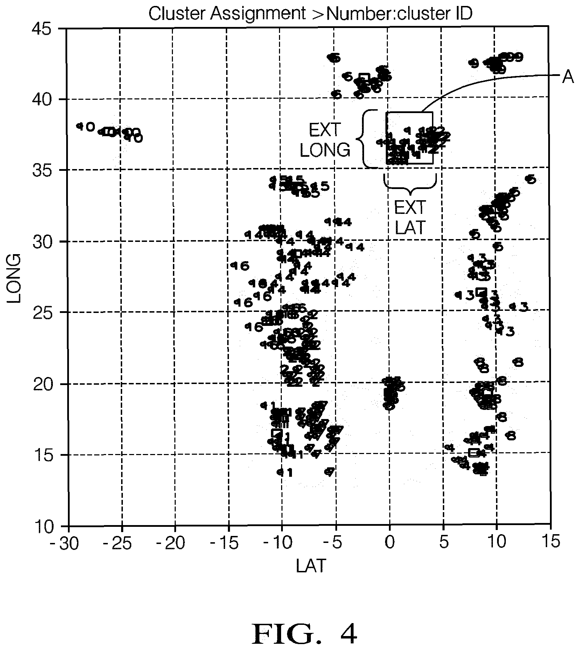

Figure 4 shows the vehicle cluster of figure 3 in more detail. The box A shows extension or spread parameters in x and y co-ordinates equivalent to Latitude and Longitude ranges or spread as shown. The extension or spread (function) may be defined here as extension($r_{lon}$) $\times$ extension($r_{lat}$) or also annotated in the figure as "ext long" and "ext lat" in the figure, which represents a spread for ($r_{lon}$) and by a spread for ($r_{lat}$). The multiplication term "x" in the above term and in the following equations is not necessarily a multiplication function but denotes the boundaries of the spreads with respect to each parameter (i.e. the parameters of a multidimensional domain) such that when the density function value is calculated it is based on the number of detections that fall within the denoted spreads of the spread function. So in other words the spread function and the determination of density (function) value may be considered as an (e.g. multidimensional) envelope dictated by the parameters of spread, and the number of detections which fall in this. It is noted that size of the spread for each parameter (e.g. size of box A for the two parameters) may be selected to be any size and not necessarily include i.e. encapsulate all the detections in the cluster; alternatively the spread function may be equivalent to the cluster. So in a simple example the extension may be the ranges of the parameters such that in the example of figure 3, box A marks the border of the cluster. In the example the ext long may be 36-37 and the ext lat is 0-5. The term "extension" or "spread" can be regarded generally as a range or spread of values, and the term "spread function" as a function relating to the spreads of one or more detection parameters.

Step S4

In this step the density function or value is determined; in simple embodiments this is based on the number of detections that fall within the specified ranges or extensions calculated in step S3; i.e. the number of detections falling within the spread parameter. So again referring to figure S3; in the example the density function (value) is the number of detections falling within box A.

The density function/value is then used to distinguish between objects in step S5. So the density function may be calculated from ranges with respect to one or more radar parameters.

Step 5

In step 5, the density function/value is used to classify the detected object; e.g. to a particular class of object such a vehicle, pedestrian, road sign, or guard rail or such like; so to distinguish objects of interest or non-interest for example.

In the above, example a simple reflection-density based parameter is the number of detections (from the cluster) that fall within a prescribed two dimensional space (spread function) dictated by ranges from longitude and latitude.

In the example if there are N detections contained in the ranges of longitude and latitude ($r_{lon}$, $r_{lat}$, ) that is extension($r_{lon}$) and extension($r_{lat}$) then the reflection-density value can be N/( extension($r_{lon}$) $\times$ extension($r_{lat}$)) where extension($r_{lon}$) $\times$ extension($r_{lat}$) is the spread function

In some aspects a plurality of density function values may be determined and these analyzed together to ascertain the class of object. In the above , example a simple reflection-density based parameter is the number of detections (from the cluster) that fall within a prescribed two dimensional space dictate by ranges from longitude and latitude.

Further Refinements

It is to be noted that the density function value may be considered as the number of detections that fall within extension/spread function in respect of one detection parameter, or within an extension/spread function with respect to multiple detection parameters, as will be described further hereinafter.

Additionally or alternatively, the two or more extension/spread functions may be analysed together in order to classify objects; an example is given below.

In a particular advantageous embodiment the density function values with respect to latitude and longitude are computed and compared (i.e. analyzed together) to determine and classify objects. In particular the ratio of the latitude density function and longitude density function is computed and the result used to classify objects.

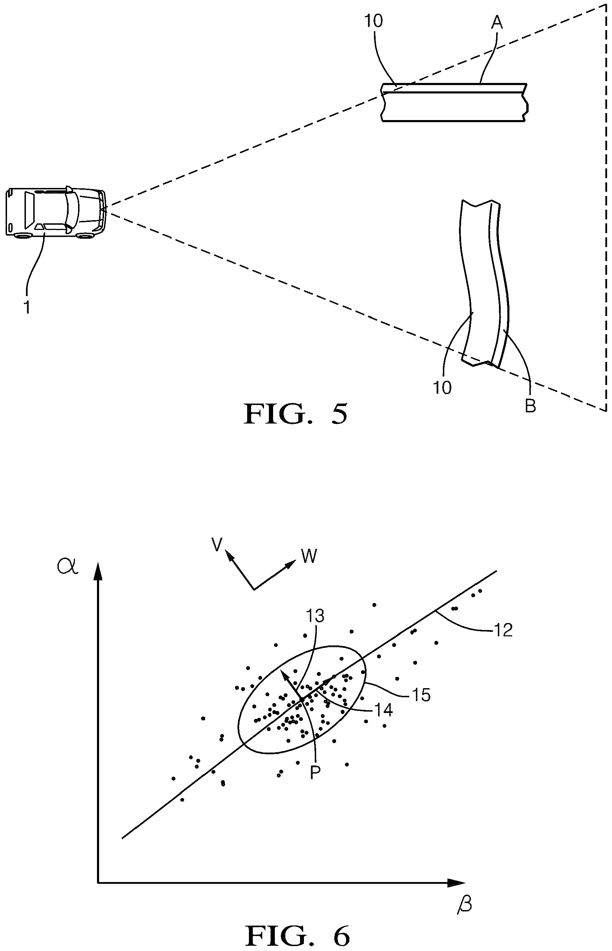

Figure 5 shows a schematic plan view of a vehicle with radar 1 which receives detections from a guardrail 10 in e.g. two different orientations shown schematically as A and B. In the first orientation A the density function value with respect to a spread function of the single parameter of latitude, is high and for the density function value with respect to a spread function of the single parameter of in longitude, it is small. For the guardrail in orientation B the density function value with respect to a spread function of the single parameter of latitude is small and in longitude it is large. Thus information from these density functions does not give useful information. However the density function value (spread function =latitude only )/density function value (spread function =longitude only) is a small value in orientation B and a very large value in orientation A. For a vehicle the corresponding ratio is around 1. Thus, the use of ratios of density function values can be used better to discriminate objects of different types i.e. classify objects.

In further refined embodiments, classification of objects is based on one or more density function values along with the extension/spread parameters obtained from step S3 to discriminate objects i.e. classify objects as shows by optional arrow A in figure 2.

Step S3 will now be described in more detail.

In the example described above a simple reflection-density value is based on the spread function equivalent to the number of detections (from the cluster) that fall within a prescribed two dimensional space dictate by ranges from longitude and latitude. So if there are *N* detections contained in the set ranges of a $r_{lon}$, $r_{lat}$, that is *extension*($r_{lon}$) and *extension*($r_{lat}$) then the reflection-density value is N/ *extension*($r_{lon}$) $\times$ *extension*($r_{lat}$) where *extension*($r_{lon}$) $\times$ *extension*($r_{lat}$) is the spread function.

In an example of figure 4, the box which bounds the detections may alternatively be three dimensional and defined by ranges or extension (functions) in three dimensions; hence in this example; the density function value is given by:

$$N / extension(r_{lon}) \times extension(r_{lat}) \times extension(r_{ele})$$

Where extension($r_{lon}$) $\times$ extension($r_{lat}$) $\times$ extension($r_{ele}$) is the 3 dimensional size of a box within or bounding the cluster' i.e. the spread function.

A general formula for the reflection-density value over a number of parameters (say $x_1, \dots , x_K$, where $K$ is the number of the parameters),

$$\rho = \frac{N}{fun(x_1,\dots,x_K)} \qquad (Eq.1)$$

where, as an example, the function $fun(x_1, \dots , x_K)$ that is the spread function in Eq.1 can be

$$fun(r_{lon}, r_{lat}) = extension(r_{lon}) \times extension(r_{lat}) \qquad (Eq.2)$$

or

$$fun(r_{lon}, r_{lat}, r_{ele}) =$$
$$extension(r_{lon}) \times extension(r_{lat}) \times extension(r_{ele}) \qquad (Eq.3)$$

In the above examples the extension function or ranges have been determined in terms of directional of spatial ranges so in respect of $r_{lon}$ $r_{lat}$ and $r_{ele}$.

However the density/spread function may be determined according to any radar variable of parameter or combination. In a simple example the density function /spread function may be calculated from speed (v) only, in which case an extension or range of v defined, and the number of detections in the cluster falling within the specified range of v determined. So the extension/spread of range of v may be 2-25 (nominal units) and the number of detection where v fall within this range determined. For density function (v) - the density is determined as the number of reflection detection on the cluster that fall in this range (extension (v))

It should be noted that the spread function and hence the density (function) value may be formed from any one or combination of extension (range) function for any radar parameter of variable. In the following the density/spread function may be based on extension parameters of latitude longitude and speed:

$$fun(r_{lon}, r_{lat}, v) = extension(r_{lon}) \times extension(r_{lat}) \times extension(v)$$

A further example is the density/spread function is determined based on the number of detections falling in the following prescribed extension (ranges)(spread function) the parameters of all of latitude longitude elevation and speed:

$$fun(r_{lon}, r_{lat}, r_{ele}, v) =$$
$$extension(r_{lon}) \times extension(r_{lat}) \times extension(r_{ele}) \times extension(v)$$

The above equation/example could be regarded as the spread function is the number of detections falling in a prescribed 3-dimesional box which also have a certain speed range.

The parameters selected to determine the spread function (i.e. ranges of the extension function) may be the variables themselves or e.g. first- or second-order statistical estimates of the detection parameters mentioned above (i.e. $r_{lon}$, $r_{lat}$, $r_{ele}$, v, $f_d$, $f_{md}$, $a_m$, Rcs, etc.). The extension of $r_{lon}$, $r_{lat}$, $r_{ele}$, i.e. extension($r_{lon}$), extension($r_{lat}$), and exten-

sion($r_{ele}$), contains e.g. size information of the object under examination.

For stationary objects, speed (v), Doppler ($f_d$), and Micro-Doppler ($f_{md}$) preferably are not used. The remaining features are only certain statistical estimations of parameters $r_{lon}$, $r_{lat}$, $r_{ele}$, $a_m$, $Rcs$. However those features are not enough to distinguish closely spaced stationary objects, e.g. the stationary/slow-moving car the guardrails, poles, as shown in Figure 1.

In one aspect the extension/spread function of two or more variables may be determined from Principle Component analysis. Figure 6 shows a spread of two parameters $\alpha$ and $\beta$ of radar returns, e.g. of the cluster; the figure shows a multi-variate Gaussian distribution. The parameters may be any parameter such as $r_{lon}$, $r_{lat}$. The distribution may be centered on point P and the variables correlated. The distribution may have standard deviation values (13 and 14 respectively) in the direction v, and w, referenced from point P and perpendicular and parallel respectively to the correlation line 12. In an example, the spread or extension functions of one or both or the two variables may be determined based on one or both of these standard deviations. In one example the standard deviations may be used to determine an ellipse 15 which is the extension/spread /range function, and the number of detections falling within this ellipse is used to determine a density function parameter. Of course the skilled person would understand there may be a plethora of methodology using one or any combination of a plurality of radar parameters which can be used to determine a spread function

As mentioned in step S4 density function values are determined, which are later used for target discrimination and classification. So in one aspect the method distinguishes objects using also reflection-density based classifying features.

$$\rho_x = g\left(\frac{N_{x_i}}{extension(x)/L}\right) \qquad \text{(Eq.6)}$$

where we assume the parameter $x$ can be divided into $L$ levels/segments. $x_i$ is the $i^{th}$ level/segment. $g(\cdot)$ is a estimation function, e.g. functions to get maximum, minimum, or mean estimates, i.e. $max(\cdot)$, $min(\cdot)$, $mean(\cdot)$, etc.

The parameter/variable used for above density calculation/spread function is not limited to the examples as given in Eq1~Eq6. It can be defined by other metrics. For instance, it can also be principle components from PCA (Principle Component Analysis) method.

It is noted that reflection density is closely connected to the scattering structure of the objects in physics. The denser the scattering structures on an object, the greater the reflection-density. Guardrails contain lots of free space in structure. Hence reflection-density of guardrails is typically less than that of vehicles. Refection-density of poles is also difference from that of vehicles. Vehicles, guardrails, and poles can by distinguished by reflection-density or by combining reflection-density and some other classifying features, e.g. extensions as shown in the flowchart of Figure 2.

Further Examples and Results

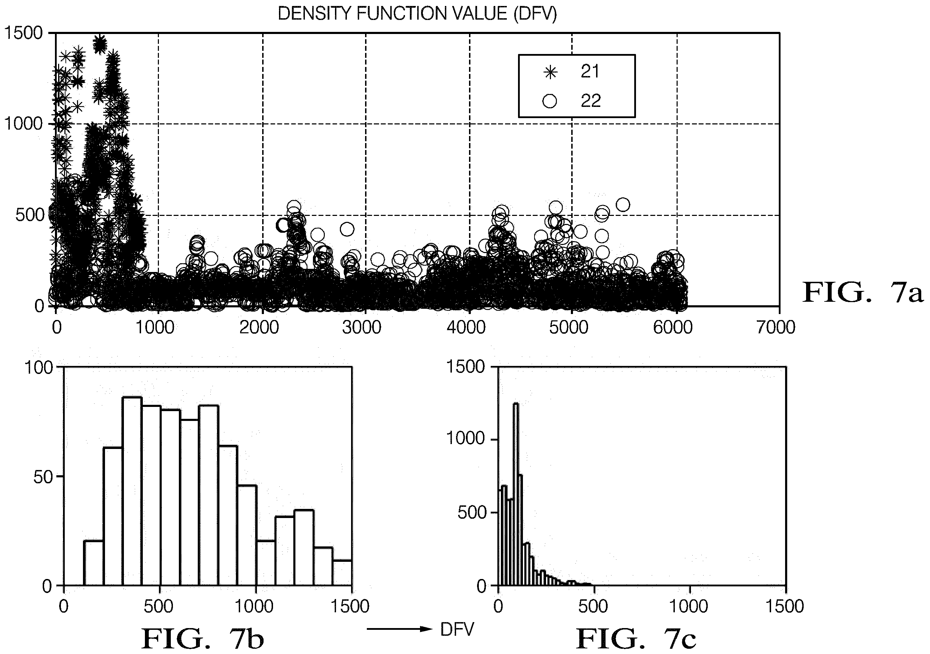

Figure 7 shows results of the density function values for a spread function of equation 3, that is fun($r_{lon}$, $r_{lat}$, $r_{ele}$) = extension($r_{lon)}$ $\times$ extension ($r_{lat}$) $\times$ extension($r_{ele}$) for various data sets (along the $\times$ -axis), with respect to a car 20 and objects in a tunnel or along a section of road with road works 21. So in other words, the y-axis shows the value of the density function value for returns with respect to another vehicle and objects in a tunnel or along a road under construction repair. The data was obtained for various scenarios and data sets including different relative orientation of the host vehicle (i.e. that equipped with the system and the other objects such as the other vehicle and other environmental objects with respect to the tunnel construction area).

As can be seen the density function (value) with respect to the car is significantly higher than the other objects. Thus the use and determination of a density function based on this can use used to glean useful information to identify and classify objects.

Further the figure shows histograms Fig 7b and 7c of the distribution of values of the said density function value of figure for both the other vehicle and the other objects respectively. As can be seen there is a wide spread in terms of the distribution for vehicles, unlike for other objects.

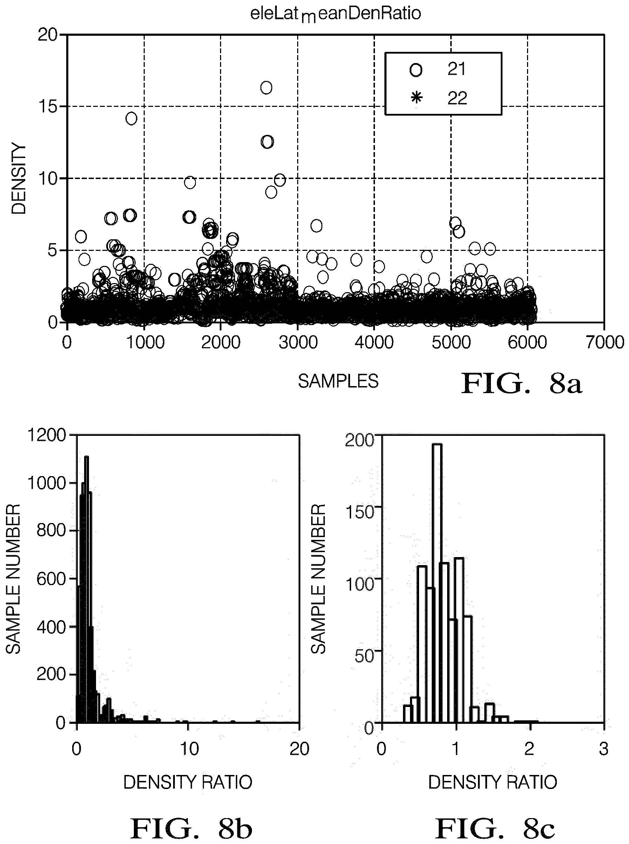

As mentioned ratios of particular density functions can often provide more informative data or basis for classifying objects in the environment of the vehicle. Figures 8, 9 and 10 show figures similar to figure 7 showing the density function values and spreads from a number of sample data sets for again another car (stationary) 21 and other objects 22 (e.. by the side of a road undergoing roadworks/in a tunnel), with respect to density function ratios as follows:

Figure 8 shows the density function value (ratio) of elevation density function value (based on a spread function of ext rele) /lateral density function value (based on a spread function of ext rlat,) so (N/ext rele)/(N/ext rlat).

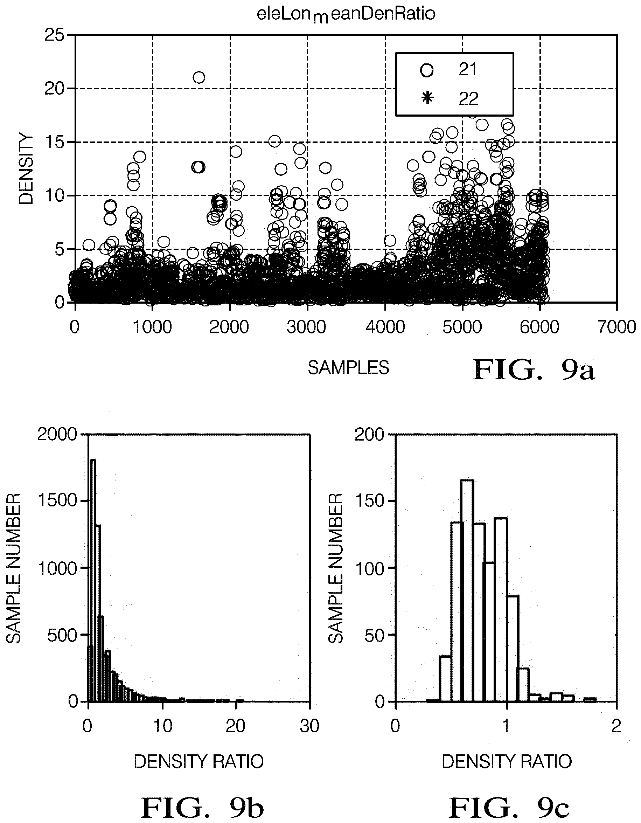

Figure 9 shows the density function value (ratio) of elevation density function value (based on a spread function of ext rele)) / longitudinal density function value (based on a spread function of ext rlong,) so (N/ext rele)/(N/ext rlong); and

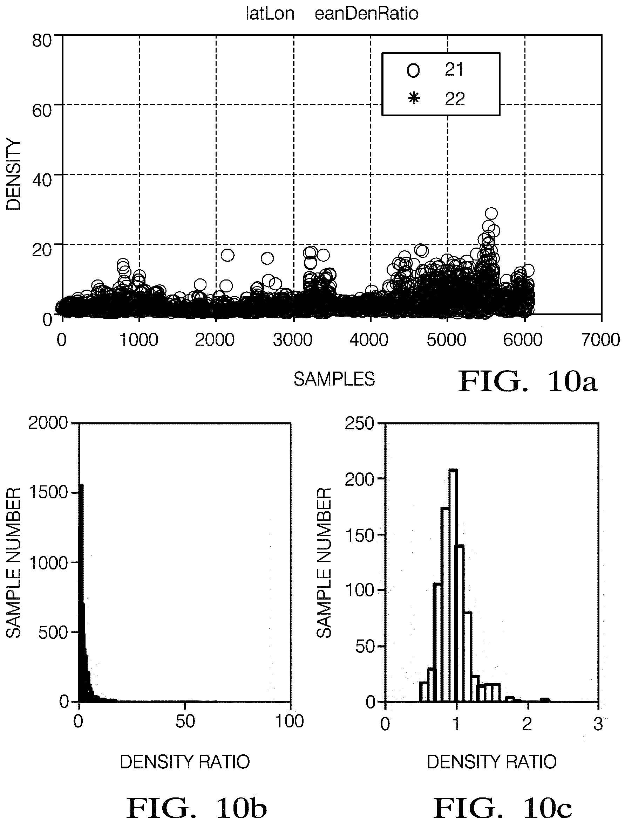

Figure 10 shows the density function (ratio) of lateral position density function value (based on a spread function of ext rlat)) /longitudinal density function value (based on a spread function of ext rlong,) so (N/ext rlat/(N/ext rlong).

In the figures again figures 8b 9b and 10b shows histograms of the density function value ratios for samples with respect to detections form a stationary vehicles and figures 8c 9c and 10c shows histograms of the density function ratios for samples with respect to detections from other objects. As can be seen the figures provide useful data in distinguishing between a (stationary) vehicles and other objects.

**Claims**

1. In an vehicle equipped with an on-board radar system, a method of classifying objects in the vicinity of said vehicle comprising the following steps:

    a) emitting radar signals from said vehicle and determining radar detections from reflections of the said signals from objects in the vehicle vicinity;
    b) based on one or more parameters of the detections, clustering said detected detections into one or more clusters representing objects in said vehicle vicinity;
    c) for a cluster, determining a measure of the spread of at least one detection parameter;
    d) determining a spread function, said spread function being a function of said spread of one or more detection parameters;
    e) determining a value of a density function based on the number of detections that fall within said spread function;
    f) classifying said object based on said density function value.

2. A method as claimed in claim 1 wherein in step b) and or step d) one or the parameters of detections are: spatial position in longitude ($r_{lon}$), spatial position in latitude ($r_{lat}$), spatial position in elevation ($r_{ele}$), speed ($v$), Doppler ($f_d$), Micro-Doppler ($f_{md}$), Amplitude ($a_m$), and Radar Cross Section (RCS).

3. A method as claimed in claims 1 or 2 wherein said spread (function) is determined from a statistical parameter of said detection parameter.

4. A method as claimed in any preceding claim wherein said statistical parameter is the mean and/or standard deviation of the detection parameter.

5. A method as claimed in any preceding claim wherein said spread function is determined form Principle Component analysis methodology.

6. A method as claimed in any preceding claim where said spread function is defined as $extension(r_{lon}) \times extension(r_{lat})$ where $extension(r_{lon})$ $and$ $extension(r_{lat})$ are spreads of the parameter of spatial position in longitude ($r_{lon}$) and latitude ($r_{lat}$) respectively.

7. A method as claimed in any preceding claim where said spread function is defined as $extension(r_{lon}) \times extension(r_{lat})$ $\times extension(r_{ele})$ where $extension(r_{lon})$, $extension(r_{lat})$, $extension(r_{ele})$ are spreads with respect to the spatial position in longitude ($r_{lon}$), latitude ($r_{lat}$), and elevation ($r_{ele}$) respectively.

8. A method as claimed in any preceding claim where said spread function is defined as $extension(r_{lon}) \times extension(r_{lat})$ $\times extension(r_{ele}) \times extension(v)$ where $extension(v)$ is a spread with respect to the parameter of speed ($v$).

9. A method as claimed in any preceding claim where in step f) said objects are classified on the basis of one or more density function values and additionally data relating to one of more spread functions determined from step d).

10. A method as claimed in any preceding claim including the additional step of determining the ratios of one or more density function values and classifying said objects in the basis of these ratio(s).

**11.** A method as claimed in claim 10 where said additional step is based on one of the following density function value ratios:

i) the density function value of based on a spread function of spatial position of elevation ($r_{ele}$) and density function based on a spread function of spatial position of latitude ($r_{lat}$,) (N/*ext* $r_{ele}$)/(N/*ext* $r_{lat}$));
ii) the density function value of based on a spread function of spatial position of elevation (rele) and density function based on a spread function of spatial position of longitude (rlat,) (N/ext rele)/(N/ext rlong); and,
iii) the density function value of based on a spread function of spatial position of latitude (rlat) and density function based on a spread function of spatial position of longitude (rlong) (N/ext rele)/(N/ext rlat)).

**12.** A method as claimed in any preceding claim where objects are classified in step f) into one or more of the following classes: moving vehicle, stationary vehicle, pedestrian, road sign, post, guard or side rail.

FIG. 1

FIG. 2

51

52

53

54

55

A

FIG. 3

Cluster Assignment >Number:cluster ID

FIG. 4

FIG. 5

FIG. 6

FIG. 7a

DENSITY FUNCTION VALUE (DFV)

* 21
○ 22

FIG. 7b

FIG. 7c

DFV

eleLat$_m$eanDenRatio

FIG. 8a

FIG. 8b

FIG. 8c

eleLon<sub>m</sub>eanDenRatio

FIG. 9a

FIG. 9b

FIG. 9c

latLon eanDenRatio

FIG. 10a

FIG. 10b

FIG. 10c

Europäisches
Patentamt

European
Patent Office

Office européen
des brevets

# EUROPEAN SEARCH REPORT

**Application Number**

EP 17 15 1251

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/055746 A1 (KNORR BREMSE SYSTEME FÜR NUTZFAHRZEUGE GMBH [DE]) 23 April 2015 (2015-04-23) | 1-12 | INV. G01S13/93 G01S13/58 |
| Y | * the whole document * | 2,6-8 | G01S13/72 G01S7/41 |
| X | DE 10 2007 024391 A1 (BOSCH GMBH ROBERT [DE]) 27 November 2008 (2008-11-27) | 1-12 | G01S13/524 |
| Y | * paragraphs [0034] - [0037]; figure 4 * | 2,6-8 | |
| Y | US 2016/084944 A1 (BIALER ODED [IL] ET AL) 24 March 2016 (2016-03-24) * paragraphs [0002] - [0019]; figures 1-4 * | 2,6-8 | |
| Y | WO 2007/111512 A1 (TNO [NL]; VAN HEIJNINGEN ADRIANUS WILLEM [NL]; KLEIJWEG JOHANNES CORNE) 4 October 2007 (2007-10-04) * page 1, line 17 - page 2, line 24 * * page 5, line 12 - page 6, line 21; figures 3, 4a, 4b * | 2,6-8 | |
| | | | **TECHNICAL FIELDS SEARCHED (IPC)** |
| Y | DE 10 2015 007040 A1 (AUDI AG [DE]) 1 December 2016 (2016-12-01) * paragraphs [0016], [0034]; figure 3 * | 2,6-8 | G01S |

The present search report has been drawn up for all claims

| Place of search | Date of completion of the search | Examiner |
|---|---|---|
| Munich | 26 June 2017 | Schmelz, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 15 1251

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2017

| Patent document cited in search report | | Publication date | Patent family member(s) | | Publication date |
|---|---|---|---|---|---|
| WO 2015055746 | A1 | 23-04-2015 | CN | 105637384 A | 01-06-2016 |
| | | | DE | 102013017347 A1 | 23-04-2015 |
| | | | EP | 3058391 A1 | 24-08-2016 |
| | | | US | 2016252611 A1 | 01-09-2016 |
| | | | WO | 2015055746 A1 | 23-04-2015 |
| DE 102007024391 | A1 | 27-11-2008 | AT | 473499 T | 15-07-2010 |
| | | | DE | 102007024391 A1 | 27-11-2008 |
| | | | EP | 2162872 A1 | 17-03-2010 |
| | | | US | 2010286874 A1 | 11-11-2010 |
| | | | WO | 2008145430 A1 | 04-12-2008 |
| US 2016084944 | A1 | 24-03-2016 | CN | 105445726 A | 30-03-2016 |
| | | | DE | 102015115794 A1 | 24-03-2016 |
| | | | US | 2016084944 A1 | 24-03-2016 |
| WO 2007111512 | A1 | 04-10-2007 | AT | 502370 T | 15-04-2011 |
| | | | EP | 2011103 A1 | 07-01-2009 |
| | | | WO | 2007111512 A1 | 04-10-2007 |
| DE 102015007040 | A1 | 01-12-2016 | NONE | | |

EPO FORM P0459

For more details about this annex : see Official Journal of the European Patent Office, No. 12/82